# EUROPÄISCHE PATENTANMELDUNG

(11) **EP 2 639 597 A1**
(43) Veröffentlichungstag der Anmeldung: **18.09.2013**
(21) Anmeldenummer: 13158991.3
(22) Anmeldetag: 13.03.2013
(51) Int. Cl.: G01S 19/17, G01S 19/20

(54) **Verfahren und Anordnung zur Ortung und Bergung von Personen**

(30) Priorität: 14.03.2012 DE 102012203988
(71) Anmelder: Technische Universität Dresden, 01069 Dresden (DE)
(72) Erfinder: Buchroither, Manfred, Prof., 01187 Dresden (DE); Ehlert, Guido, 01217 Dresden (DE); Hetze, Bernd, 09618 Brand-Erbisdorf (DE); Kohlschmidt, Horst, 01309 Dresden (DE); Prechtel, Nikolas, Dr., 01309 Dresden (DE)
(74) Vertreter: Lippert, Stachow & Partner

(57) **Zusammenfassung**

Der Erfindung, welche ein Verfahren und eine Anordnung zur Ortung und Bergung von Personen betrifft, liegt die Aufgabe zugrunde, ein Verfahren und eine Anordnung anzugeben, mit welchen die Ortung eines zu Bergenden und die Navigation des Rettungsteams in der Felswand von einer Rettungsleitstelle aus auch bei fehlendem Sichtkontakt technisch unterstützt werden. Diese Aufgabe wird verfahrensseitig dadurch gelöst, dass von dem Geländeabschnitt ein dreidimensionales Modell erstellt wird und dass die autonom übertragenen GPS-Positionsdaten in einer Ansicht des dreidimensionalen Modells als Positionsmarken dargestellt werden. (Fig. 7)

## Beschreibung

Die Erfindung betrifft ein Verfahren zur Ortung und Bergung von Personen, bei welchem GPS-Positionsdaten, zur Ortsbestimmung eines Nutzers innerhalb eines Geländeabschnitts, an einen zentralen Server drahtlos übermittelt und gespeichert werden.

Die Erfindung betrifft auch eine Anordnung zur Ortung und Bergung von Personen, bei welcher ein mobiles Endgerät GPS-Positionsdaten ermittelt und drahtlos mit einem zentralen Datenserver zur Datenübertragung verbunden ist.

Die hier dargestellte Erfindung sucht eine technische Lösung, um bei fehlendem Sichtkontakt die Ortung eines zu Bergenden und die Navigation des Rettungsteams in der Felswand von einer Rettungsleitstelle aus technisch optimal zu unterstützen.

Durch ein geeignetes Assistenzsystem für die Bergrettung soll die Bergung sicherer und schneller gemacht werden. Bergrettung muss möglichst schnell und unter der Prämisse maximal möglicher Sicherheit des Rettungsteams stattfinden. Die Bergung von Personen aus einer Felswand ist extrem erschwert, wenn durch Tageszeit oder Nebel direkter Sichtkontakt verhindert ist.

Ohne Sichtkontakt zum Verunglückten war nach dem Stand der Technik eine Bergung bisher entweder unmöglich oder extrem risikoreich. Eine geeignete technische Lösung bestand bis dato nicht.

Rettungsunterstützende Systeme aus dem Stand der Technik, welche in Notsituationen Positionsdaten an Dienstleister senden und mit vorhandenen Geodaten interagieren, haben eine längere Historie. Derartige Applikationen fallen unter den Begriff "Infomobility". Dabei werden umfeldbeschreibende Geodaten, dynamische Positionsdaten und eine Visualisierungskomponente gekoppelt.

Das Forschungsprojekt PARAMOUNT15 entwickelte 2002 bis 2004 einen Prototyp eines mobilen Informations- und Navigationssystems für Bergwanderer (PARAMOUNT 2005 - PARAMOUNT (2005) : PARAMOUNT Project-Homepage - http://www.paramount-tours.com), welches neben touristischer Informationsvermittlung auch im Bereich Search-and-Rescue einsetzbar sein sollte. Mobilseitig wurden Windows-Mobile-PDAs mit GPS-Empfänger oder Smartphones genutzt. Ähnliche Zielsetzungen, aber unter Einbindung weiterer technischer Komponenten (Magnetometer, Beschleunigungsmesser, barometrischer Höhenmesser), verfolgten die Projekte PANORAMA16 und SARFOS17 (LECHNER 2006 - LECHNER, W. (2006): Search and Rescue Forward Operation Support System - Status Report. http://esamultimedia.esa.int/docs/Naviga tionProjects/SARFOS_FP.pdf.).

Bekannte rettungsunterstützende Systeme bestehen typischerweise aus den Modulen Positionsbestimmung, Kommunikation und Visualisierung (KOTSAKIS ET AL. 2001). Ein beispielhaftes Einsatzfeld stellt die Absicherung von Patienten dar, die bei spontan auftretenden Defekten und Hilflosigkeit automatisch ihre aktuelle Position an Rettungsdienste melden (z.B. HEIMANN ET AL. 2002).

Andere Anwendungen mit bereits semi-operationellem Status finden sich bei Fahrzeugassistenzsystemen, die Unfallsituationen loggen und automatisch unter Positionsangabe Hilfe anfordern (vgl. MARTINEZ ET AL. 2010).

Die Nachteile der bekannten Lösungen bestehen darin, dass diese Positionen von Personen unter Nutzung von 2D-Koordinaten auf eine horizontale Oberfläche, beispielsweise digitale Landschaftsmodelle oder Netzwerkmodelle, projizieren (mappen) ohne eine Nutzung der dritten Dimension (z-Koordinaten). Ortung in Steilflächen (z.B. Felswände) und Visualisierung sind somit unmöglich.

Die Aufgabe der vorliegenden Erfindung besteht darin, ein Verfahren zur Ortung und Bergung von Personen anzugeben, mit welchem die Ortung eines zu Bergenden und die Navigation des Rettungsteams in der Felswand von einer Rettungsleitstelle aus auch bei fehlendem Sichtkontakt technisch unterstützt werden.

Diese Aufgabe wird durch die Merkmale der Ansprüche 1 und 9 gelöst. Besondere Ausgestaltungen des Verfahrens sind den Merkmalen der Ansprüche 2 bis 8 entnehmbar.

Wesentlich ist zum einen die autonome Übertragung der GPS-Positionsdaten zum zentralen Server ohne eine Interaktion des Nutzers. Diese Übertragung läuft automatisiert ab und wird auch nach einem Verbindungsabbruch automatisiert wieder aufgenommen. Zum anderen ist die Bereitstellung eines 3D-Modells des Geländeabschnitts ein wesentliches Merkmal. Mittels dieser Modellbereitstellung ist es möglich, die GPS-Positionsdaten in Form einer Marke in drei Dimensionen aufgelöst darzustellen. Somit kann die Position innerhalb einer Felswand überhaupt erst mit ausreichender Genauigkeit angegeben werden. Darüber hinaus stellt das Verfahren auch Mittel zur Prüfung der Plausibilität der empfangenen GPS-Positionsdaten und Möglichkeiten zur Anpassung der ermittelten Marken an das Modell zur Verfügung.

Die Erfindung soll nachfolgend anhand eines Ausführungsbeispiels näher erläutert werden. In den zugehörigen Zeichnungen zeigt
- Fig. 1: eine prinzipielle Übersicht der Komponenten des Verfahrens zur Ortung und Bergung von Personen,
- Fig. 2: eine Übersicht zum Datenfluss innerhalb des Verfahrens,
- Fig. 3: eine Übersicht der genutzten Softwareplattformen im Bereich des Mobilgerätes und auf dem Server,
- Fig. 4: eine Ansicht einer Benutzeroberfläche auf einem Mobilfunkgerät mit der Darstellung eines Hauptbildschirms (linke Abbildung) und eines Konfigurationsdialogs (rechte Abbildung),
- Fig. 5: eine Darstellung eines 3D-Geländemodells,
- Fig. 6: eine Darstellung des Geländes der Figur 5 in einer fotografischen Aufnahme zum Vergleich und
- Fig. 7: eine Darstellung des Geländemodells mit den zurückgelegten Weg anzeigenden Markern und eine Bedieneroberfläche zur Ortung und Bergung von Personen.

Der vorgestellten Anwendung liegt beispielsweise folgendes Szenario zugrunde. Eine Person oder Gruppe befindet sich in einer Felswand in Bergnot. Die Bergrettung wird alarmiert. Aufgrund eingeschränkter Sichtverhältnisse stellt die schnelle Bergung jedoch sowohl ein technisches wie auch ein Sicherheitsproblem dar. Ein geeignetes Verfahren zur Ortung und Bergung von Personen, umgesetzt in einem Assistenzsystem, soll nun erheblich das Sicherheitsrisiko reduzieren und die Bergung beschleunigen, indem die Akteure in einem virtuellen Wandmodell der Einsatzzentrale nahezu in Echtzeit präzis geortet werden können. Gleichzeitig können über eine Lageanalyse im virtuellen Modell den Rettern aus der Zentrale via Sprechfunkkontakt geeignete Navigationshilfen übermittelt werden.

Im Unterschied zu existenten Anwendungen verknüpfen sich mit dem oben genannten Szenario jedoch partiell andere Anforderungen:
- Beim Klettern ist die vertikale Bewegungsrichtung dominant. Der Z-Komponente der Positionsdaten kommt erhöhte Bedeutung zu, welche in operationellen Anwendungen kaum Bedeutung hat.
- Das Visualisierungsmodul kann sich nicht auf ein GIS-Modell stützen, in dem Geoobjekte primär aus der Kartensicht gespeichert und visualisierbar sind. Primäre Georeferenz muss ein texturiertes Wandmodell sein.
- Die Positionsübermittlung muss dynamisch und autonom sein. Abschattung in der Felswand erfordert einen autonomen Verbindungsaufbau des Mobilgerätes bei Übertragungsunterbrechungen.
- Gleichzeitig ist die GPS-Positionsbestimmung in der Felswand durch wechselnde Satellitensichten und Multipathing von sehr heterogener Qualität, wodurch eine Nachbearbeitung (Filterung) der Positionsdaten erforderlich wird.

Im Sinne guter Operationalisierbarkeit, aber auch aus Kostengründen kann ein das erfindungsgemäße Verfahren umsetzendes System mit Standardkomponenten realisiert werden. Gerätetechnisch besteht es beispielsweise aus einem Smartphone mit GPS-Funktionalität, einem Positionsdatenserver und einem handelsüblichen Client-Rechner, dessen 3D-Visulisierungssoftware mit zusätzlichen PlugIns ausgerüstet wurde.

Das Verfahren zur Ortung und Bergung von Personen, welches in einem auch als Bergrettungsassistenzsystem bezeichneten System Anwendung findet, soll folgende Aufgaben erfüllen:
- Positionserfassung (GPS) und -speicherung für einen oder mehrere Bergretter
- Verlustfreie Übertragung der Positionsdaten zu einem Datenserver
- Transformation der GPS-Daten in ein definierbares Landeskoordinatensystem
- Abruf und aufgabenspezifische Visualisierung der Positionsdaten auf einem mobilen Endgerät

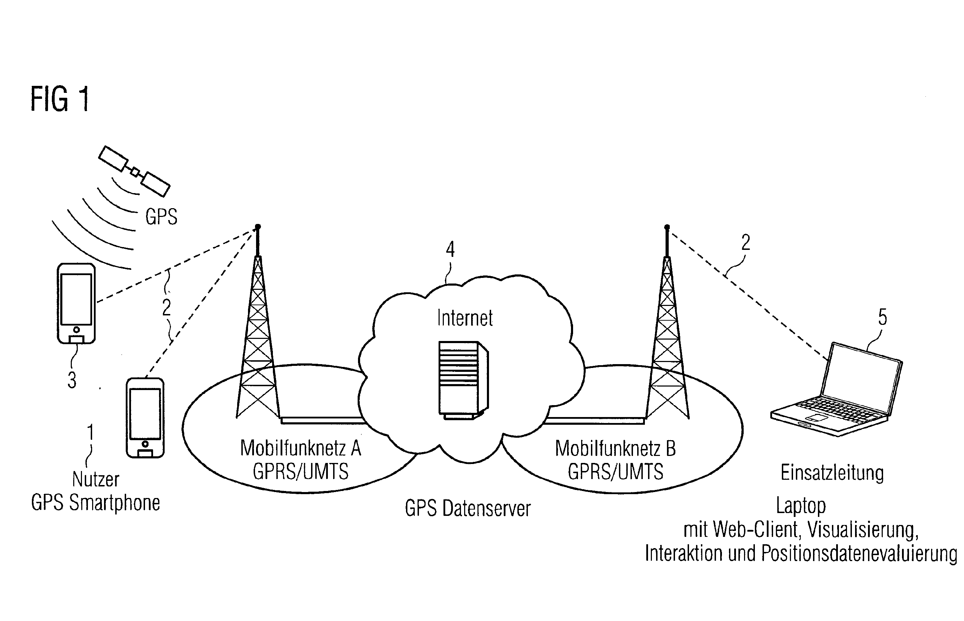

Das Verfahren zur Ortung und Bergung von Personen wird beispielsweise mittels der in der Figur 1 dargestellten Komponenten umgesetzt, welche nachfolgend näher beschrieben werden.

Ein Nutzer 1 des Verfahrens, welcher ein Bergsteiger oder auch ein Retter sein kann, ist über eine permanente Mobilfunkverbindung 2 und einen zugehörigen Teil eines Mobilfunknetzes A, mittels eines mobilen GPS-Empfängers mit einem zugehörigen Positionssender 3, mit einem zentralen Datenserver 4 verbunden. Die Art des Mobilfunknetzes, welches ein GPRS- oder UMTS-Netz sein kann, ist hierbei beliebig. Die in regelmäßigen oder unregelmäßigen Intervallen bestimmten GPS-Daten werden ohne Nutzerinteraktion über die Mobilfunkverbindung 2 an den Datenserver 4 übertragen.

Dieser zentrale Datenserver 4 verwaltet alle eingehenden Positionsdaten in einer Datenbank des Datenservers 4. Über eine entsprechende Datenbankschnittstelle findet die notwendige Koordinatentransformation aus dem globalen GPS-Koordinatensystem in das für das Wandmodell benutzte Landeskoordinatensystem statt.

Über ein implementiertes Webinterface des Datenservers 4 werden in zu definierenden Intervallen die vorhandenen Positionsdaten abgefragt und von einem Web-Client 5 zur Abfrage dynamischer Positionsdaten, der beispielsweise auf einem Laptop der Einsatzleitung implementiert wird, zwischengespeichert. Die Übertragung der Daten zum Web-Client 5 erfolgt über einen anderen Teil eines Mobilfunknetzes B und meist auch einen Abschnitt der drahtlosen Kommunikation 2.

Ein Visualisierungsmodul stellt die zentrale Verarbeitungskomponente auf dem mobilen Rechner 5 der Einsatzleitung dar. In ein zuvor erstelltes 3D-Felswandmodell lassen sich zur besseren Orientierung Kletterrouten einblenden. In diesem Kontext findet auch die Positionsdarstellung der dynamisch abgerufenen GPS-Daten des Nutzers 1 statt. Ein spezielles User-Interface gestattet ein effektives Navigieren.

Ein Positions-Evaluations-Modul prüft und filtert eingehende Positionsdaten, da diese beispielsweise geländebedingt durch Reflexionen oder Abschattungen verfälscht sein können.

Mittels einer derartigen Umsetzung des Verfahrens zur Ortung und Bergung von Personen besteht die Möglichkeit, eine Bergrettung mittels eines Bergrettungsassistenzsystems ohne Sichtkontakt durchzuführen, indem die Navigation im Fels durch das Assistenzsystem in der Bergrettungszentrale unterstützt wird.

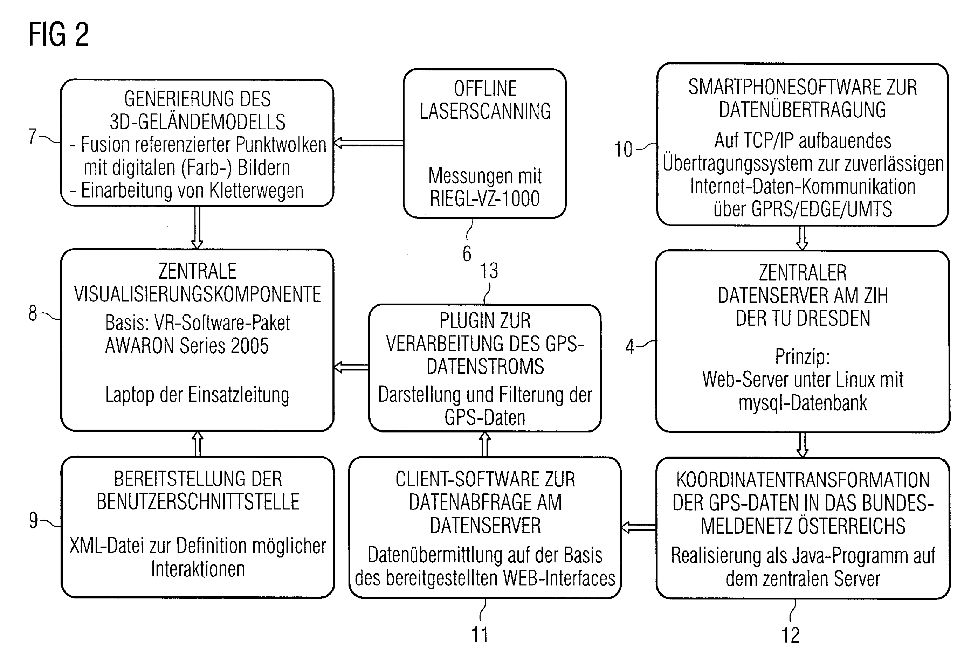

Der Datenfluss innerhalb des Projektes wird nachfolgend mithilfe der Figur 2 beschrieben. Die vor dem eigentlichen Verfahrensablauf im dargestellten Block "Offline Laserscanning" 6 erzeugten Daten des Geländes, welches beispielsweise mittels eines Lasers vermessen wurde, wird im Block "Generierung des 3D-Geländemodells" 7 zu einem digitalen 3D-Geländemodell verarbeitet. Hierbei können vorhandene Kletterwege oder andere Informationen in das Modell eingearbeitet werden.

Dieses Modell kann auf einer Visualisierungskomponente 8 beispielsweise mittels eines bereitgestellten 3D-Visualisierungs-Systems und/oder einer 3D-Visualisierungssoftware dargestellt werden. Als Komponente 8 kann beispielsweise ein Laptop der Einsatzleitung genutzt werden. Die Interaktion mit diesem System erfolgt beispielsweise über eine mittels XML-Datei generierbare Benutzeroberfläche bzw. Benutzerschnittstelle 9.

Die beispielsweise mittels eines Smartphones 3 gesendeten Daten werden in dem zentralen Datenserver 4 in einer Datenbank gespeichert. Auf diesem Smartphone 3 läuft ein Programm ab, welches die GPS-Daten ermittelt und ohne eine Nutzerinteraktion selbstständig an den Datenserver 4 überträgt. Dies ist im Block "Smartphonesoftware zur Datenübertragung" 10 dargestellt. Als zentraler Datenserver 4 ist ein Server mit einem Linux-Betriebssystem und einer SQL-Datenbank (mysql-Datenbank) angegeben.

Ein Web-Interface 11 steuert die Datenbereitstellung vom Server 4. Für die angeforderten Positionsdaten wird eine Transformation beispielsweise wie dargestellt in das Landeskoordinatensystem des Zielgebietes im Modul Koordinatentransformation 12 vorgenommen.

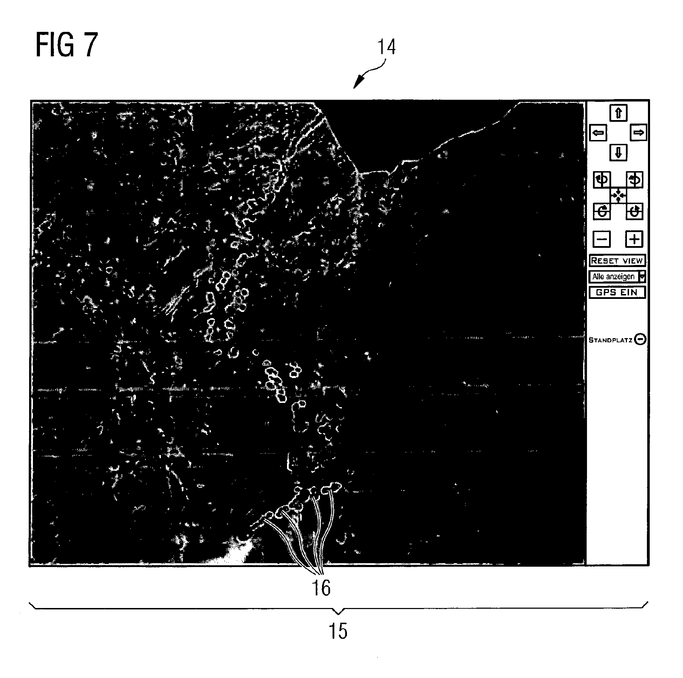

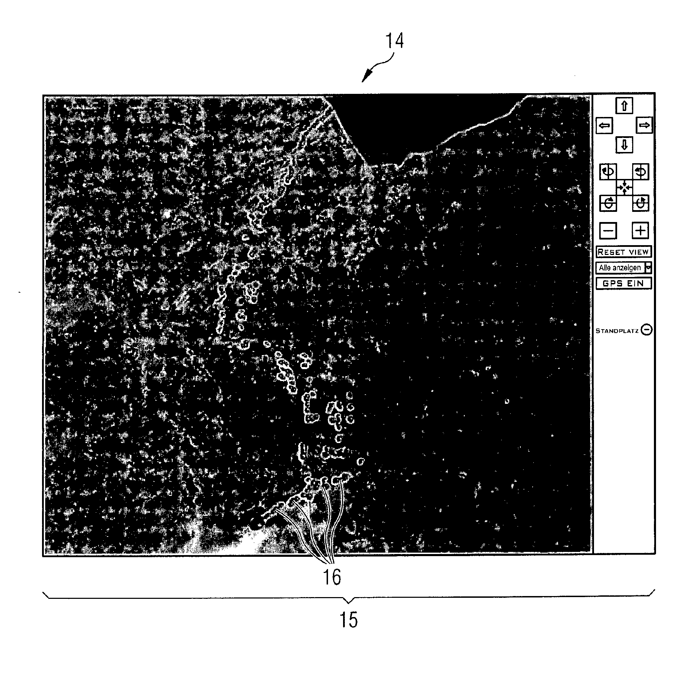

Die ankommenden GPS-Datensätze durchlaufen nachfolgend im Modul Verarbeitung der GPS-Daten 13 einen abschließenden Filterschritt mit dem Ziel, nur solche Daten anzuzeigen, die einer Plausibilitätsprüfung genügen. Diese Prüfung soll die durch das Gelände verfälschten Positionsdaten erkennen und als eventuell fehlerhaft darstellen oder deren Darstellung verhindern. Das Modul Verarbeitung der GPS-Daten 13 beinhaltet auch eine Schnittstelle (Plugin) zur Kopplung an die Visualisierungskomponente 8, an welche diese Daten zur Darstellung im 3D-Geländemodell übergeben werden. Diese Positionsdaten können im Geländemodell als Punkte oder Marken eingefügt oder dargestellt werden, wie in der Figur 7 gezeigt ist. Diese nacheinander im Geländemodell erscheinenden Punkte markieren den zurückgelegten Weg eines Bergsteigers 1 oder eines Rettungsteams 1 auf dem Weg zu einer zu bergenden Person.

Eine sichere und verlustfreie Übertragung der GPS-Positionsdaten zum Server stellt eine wesentliche Komponente dar. Ist die bereitgestellte Software aktiv, erfolgt die Datenübertragung ohne Benutzereingriffe. Besteht temporär keine Mobilfunkverbindung, werden die Daten auf dem Smartphone zwischengespeichert und bei Netzverfügbarkeit automatisch nachträglich versendet.

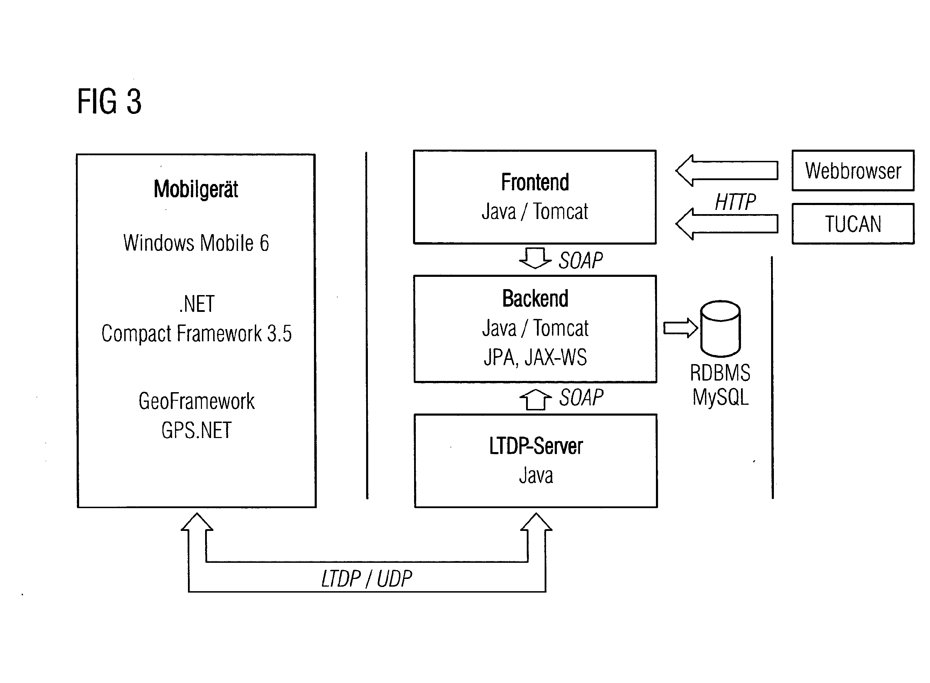

Die Figur 3 zeigt in Anlehnung an das Modell aus der Figur 1 beispielhaft die verwendeten Softwareplattformen im Bereich des Mobilgerätes und auf dem Server.

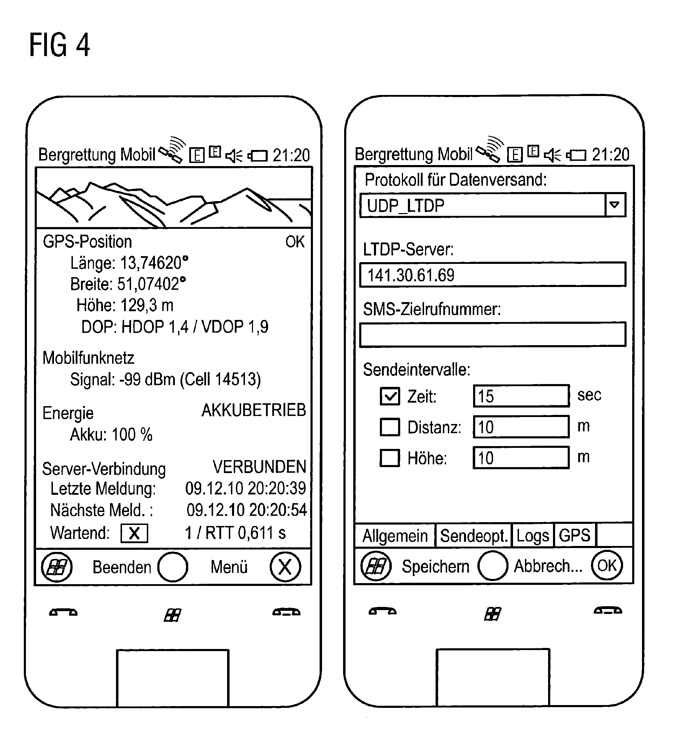

Für die Implementierung auf der Mobilseite wurde durch die Firma Garmin, Deutschland, ein Smartphone vom Typ Garmin-Asus Nüvifone M10 zur Verfügung gestellt. Die Software auf dem Mobilgerät wurde in C# basierend auf dem .NET Compact Framework 3.5 unter Nutzung der Native Power-Management-API von Windows Mobile und den Bibliotheken GeoFramework 3 und GPS.NET 4 entwickelt. Daraus resultiert die in der Figur 4 dargestellte Benutzeroberfläche auf dem Mobilfunkgerät.

Der Webservice und ein Web-Frontend sind Java-Applikationen, die in Verbindung mit dem Tomcat-Server arbeiten. Das Backend sorgt für die persistente Speicherung der Positionsdaten in einer Datenbank und stellt Schnittstellen zu diesen Daten als Webservices zur Verfügung. Das Frontend greift per SOAP auf die Daten des Backends zu und stellt die Schnittstelle zur 3D-Visualisierung sowie eine Bedienoberfläche im Webbrowser zur Verfügung.

Zur Realisierung der Übertragungsstrecke zwischen dem Mobilgerät des Retters und dem Server wurde ein spezielles UDP-basiertes, optimiertes und bandbreitenminimales Protokoll entwickelt, das als "Location Tracking Datagram Protocol" (LTDP) bezeichnet wird. Es übernimmt die Codierung und Decodierung der übertragenen Daten und deren Übergabe an die Anwendungsschicht, sichert die Zuverlässigkeit der Datenübertragung und regelt Authentifizierung und Session-Management.

Für die Fernunterstützung der Bewegung in der Wand ist ein präzises 3D-Felswandmodell ein Schlüsselelement des Verfahrens. Als hervorragend geeignetes Studienobjekt wurde die Dachsteinsüdwand in der Obersteiermark ausgewählt. Sie stellt eine auf einer Breite von mehreren Kilometern über 800 Höhenmeter aufragende Wand dar. Die Wand kulminiert in drei markanten Gipfeln, von West nach Ost Torstein (2948 m), Mitterspitz (2925 m) und Hoher Dachstein (2995 m), und setzt sich bei fallenden Höhen über die Dirndln (2818 m) bis zum Hunerkogel (2687 m) fort.

Konventionelle digitale Geländemodelle können extreme Steilräume nur unzureichend abbilden.

Sowohl eine aerophotogrammetrische wie auch eine auf flugzeuggestütztem Laserscanning basierende Herstellung führen zu einer starken projektiven Verkürzung, so dass Felswände nur mit wenigen, unsicheren Punkten abgetastet werden.

Konventionell erstellte Geländemodelle mit vertikaler Sicht auf den Untersuchungsraum können Hinterschneidungen und Überhänge im Fels nicht wiedergeben.

Für das vorliegende Verfahren wurde daher eine Neuaufnahme des Geländeabschnitts notwendig. Das geometrische Primärmodell wurde so erstellt, dass die südexponierte Wand mit einem terrestrischen Laserscanner von zwei südlich vorgelagerten Gipfeln aufgenommen wurde, dem Mitterstein (2097 m) und dem Marstein (1861 m). Gerätestandorte in mittlerer Wandhöhe (ca. 2400 m) wären ideal gewesen, aber nicht vorhanden. Dennoch konnte näherungsweise ein "Steep Slope Model" erzeugt werden, bei dem die Aufnahmerichtung an der Normalen der Wandfläche ausgerichtet ist (BUCHROITHNER 2002).

Die lokale Topographie erlaubt von oben genannten Punkten eine Aufnahme des Targets in Distanzen bis ca. 2,5 km (z.B. Entfernung Mitterstein - Hoher Dachstein: 1,3 km). Die Oberfläche wird von den Messstandpunkten aus unter Vertikalwinkeln von ca. -10° bis 45° in einem horizontalen Fächer von ca. 90° gescannt. Die sehr spezifischen Anforderungen an die Messungen konnten durch den genutzten Scanner RIEGL LPM 321 erfüllt werden. Das Gerät, welches nach dem Impulslaufzeitverfahren arbeitet, ist für anspruchsvolle Messumgebungen ausgelegt, kann von einer Person ohne PC-Kopplung bedient werden und besitzt eine sehr hohe Reichweite von bis zu 6000 m, die bei Messsystemen auf Phasendifferenzbasis nicht erreicht werden.

Zusätzlich zum Scan erlaubte die Gerätekonfiguration eine Bildaufnahme, die im Postprocessing den Laserpunkten RGB-Werte zuordnet. Für die digitalen Photographien der Wand diente eine Nikon D100 mit kalibrierten Objektiven. Die Gerätestandpunkte wurden mit DGPS eingemessen. Zusätzlich konnten weitere Geländepasspunkte genutzt werden, die zuvor mit einem Laser-Tachymeter-Theodolit Wild-Leica TCR 1103 und Prismenreflektoren aufgenommen worden waren.

Bei weit entfernten Zielpunkten wird die Wandoberfläche mit Laserpunkten von wenigen Dezimetern Durchmesser beleuchtet. Schon aus der geometrischen Konfiguration müssen sich Punktlagefehler in dieser Größenordnung ergeben. Eine Alternative zum gewählten Messaufbau, jedoch aufwand- und kostenbedingt verworfen, hätte in einem horizontal orientierten Scan aus einer Hubschrauber- oder Flugzeugbefliegung parallel zur Wand gelegen.

Das Wandmodell konnte nun aus den zwei Scans mit dazugehörigen Bilddaten generiert werden. Die Prozessierung der Daten erfolgte in der firmeneigenen RiProfile-Software. Im Ergebnis wurde ein die Dachsteinsüdwand umgebender Felsbereich mit einer Breite von ca. 3 km und einer Höhenerstreckung von ca. 1 km als Geometrie in drei Teilen mit unterschiedlichen Auflösungen im vrml-Format herausgeschrieben.

Dieses Gesamtmodell bestand bei einer Detaillierung von 1 m pro Pixel aus ca. 6 Millionen Polygonen und bei 2 m pro Pixel aus ca. 1 Million Polygonen. Dabei wurden die Scanpunkte des Modells einmal in der Texturfarbe eingefärbt und zusätzlich passfähige Texturkacheln erzeugt.

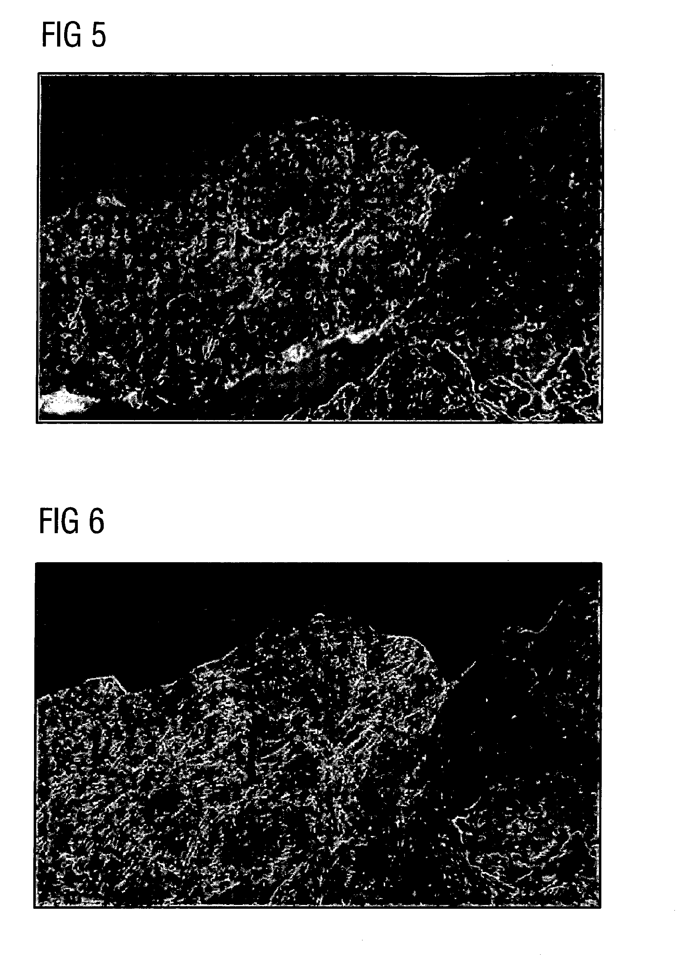

Der Folgeschritt bestand in der Anpassung des 3D-Wandmodells an rechentechnische Erfordernisse. Am Ende wurde ein Gesamtmodell mit variabler Maschenweite, bestehend aus 2,5 Millionen Polygonen, gewählt, bei dem keine Texturen zum Einsatz kommen und dessen Scenegraph in Hinblick auf nachfolgend beschriebene Auswertealgorithmen optimiert wurde. Das derart erzeugte 3D-Geländemodell ist in der Figur 5 dargestellt. Zur Gegenüberstellung zeigt die Figur 6 eine photografische Aufnahme des gleichen Geländeabschnitts.

Nachfolgend wird die dynamische Visualisierung der Position des Nutzers 1 auf der Visualisierungskomponente 8 sowie die Bestandteile des Visualisierungsmoduls beschrieben.

Auf einer Visualisierungskomponente, beispielsweise einem Laptop 8 der Bergrettung, läuft das VR-Programm TUCAN, welches eine API bereitstellt, über die zusätzliche PlugIns implementiert und eingebunden werden können.

Applikationsspezifisch wurde ein PlugIn geschaffen, welches die aktuelle Position des Nutzers 1 im 3D-Modell, wie in der Figur 7 gezeigt, darstellt. Die Positionsdaten werden über ein oben beschriebenes Web-Interface vom Server 4 abgeholt. Die Lokalisierung des Retters in nahezu Echtzeit könnte mit der vorgestellten Lösung bei geringem Zusatzaufwand um eine Lokalisierung der zu suchenden Position ergänzt werden, sofern diese Person vor Start der Tour mit einem baugleichen Gerät ausgestattet wird.

Da die Kapazitätsgrenze des VR-Programms durch das geladene Modell bereits erreicht ist, wurde die Kommunikation in ein separat laufendes (Java-)Programm ausgelagert. Dieses ruft die Daten in Intervallen von wenigen Sekunden vom zentralen Server 4 ab. Serverseitig werden die GPS-Daten dabei in Koordinaten des Österreichischen Bundesmeldenetzes umgerechnet, in welchem auch das 3D-Modell vorliegt. Derart wird sichergestellt, dass die GPS-Daten auf die 3D-Modell-Daten projiziert werden können. In diesem Java-Programm werden die Daten nochmals gepuffert, weil bei Wiederherstellung der Verbindung nach Netzunterbrechungen zwischen Nüvifone und Server bzw. Server und Laptop mehrere Datensätze auf einmal eintreffen könnten.

Das 3D-Modell eines Geländeabschnitts 15 wird auf einem Visualisierungsbildschirm 14 einer Visualisierungskomponente 8, wie in Figur 7 gezeigt, dargestellt. Das PlugIn des VR-Programms ruft über eine lokale Socketverbindung die Datensätze einzeln, vom auf dem zentralen Datenserver 4 ablaufenden Java-Programm, ab und verarbeitet diese.

Das Ziel dieser Verarbeitung ist es, einen Marker 16 auf dem Visualisierungsbildschirm 14 zu setzen bzw. zu verschieben, welcher die jeweils aktuelle Position des Nutzers 1 im 3D-Modell des Geländeabschnitts 15 beschreibt. Derart wird die aktuelle Position des Nutzers mittels einer Marke 16 oder der zurückgelegte Weg durch alle angezeigten Marken 16 dargestellt. Alternativ können nach jeweils ca. 10 zurückgelegten Metern weitere kleinere Marker gesetzt werden, um den bisherigen Weg zu dokumentieren, wie in der Figur 7 dargestellt ist. Der Visualisierungsbildschirm 14 kann Steuer- und/oder Bedienelement beinhalten, mit welchen beispielsweise die Auflösung oder der Sichtwinkel auf das 3D-Modell verändert werden kann. Ebenfalls kann eine Aktualisierung der Darstellung des Visualisierungsbildschirms 14 gesteuert werden.

Da sich der Nutzer 1 nicht im freien Gelände, sondern an einer steilen Felswand und zum Teil sogar in Spalten und Kaminen mit starker Horizontabschattung bewegt, kommt es zu nicht modellierbaren Reflexionen und Abschattungen des GPS-Signals, wodurch eine gewisse Anzahl der übermittelten Koordinaten grob falsch ist und diese ausgefiltert werden müssen. Der Filterprozess, welcher beispielsweise im Modul zur Verarbeitung der GPS-Daten 13 durchgeführt werden kann, berücksichtigt beispielsweise zwei Kriterien.

Zum einen den absoluten Abstand zur Oberfläche (Felswand) und zum anderen die relative Distanz zu einem plausiblen Vorgängerpunkt 16. Zunächst wird der Abstand einer jeden Marke 16 zur Wandoberfläche ermittelt und bei Überschreiten eines vorgegebenen Grenzwertes ignoriert. Es treten aber Fälle auf, bei denen ein Punkt zwar wandnah, aber fernab der vorherigen Punkte liegt. Deshalb wird ebenfalls überprüft, ob die aktuelle Position in der angegebenen Zeit bei Annahme einer festgelegten maximalen Geschwindigkeit von der vorigen Position aus erreicht werden kann. Ist das nicht der Fall, werden die GPS-Daten zu dieser Marke 16 ignoriert und der Folgepunkt nach dem gleichen Schema überprüft.

Diese Form einer relativen Positionsprüfung setzt voraus, dass bereits akzeptierte Punkte korrekt ermittelt wurden. Diese Annahme kann zumindest beim Einstieg in die Wand als gegeben angesehen werden, weil hier einige genau vermessene Punkte passiert werden, über die eine korrekte Initialisierung des Tracks verifiziert werden kann. An diesen signalisierten Einstiegspunkten kann softwareseitig zudem eine Kalibrierung der Höhenkoordinate erfolgen. Diese Herangehensweise hat sich in den Praxistests des Verfahrens bewährt.

Das Verfahren realisiert zusätzlich eine konsistente Darstellung der Positionsdaten im 3D-Modell. Für den Fall, dass ein Punkt die geometrischen Kriterien der Prüfung erfüllt, so besteht dennoch die Möglichkeit, dass dieser aufgrund der Modell- und Positionsfehler nicht exakt auf der Felswand des 3D-Modells liegt.

Ein Punkt im Innern des Fels ist beispielsweise im Modell nicht sichtbar. Die Visualisierung bedarf daher eines "Snapping" auf die Wandoberfläche. Dabei wird jene Marke 16 auf der Oberfläche der 3D-Modellwand ermittelt, welche der übermittelten Position am nächsten ist. Diese wird als aktuelle Position dargestellt.

Die Oberfläche des Fels bildet im 3D-Modell ein Polygonnetz. Zur Ermittlung der Marke 16 auf dieser Fläche, welche dem übermittelten Punkt am nächsten ist, werden über die API des VR-Programms nacheinander die IDs der Polygone und über diese ihre Knoten abgefragt. Anschließend wird der Fußpunkt des Lotes auf die Polygonflächen bzw. auf die Seiten des Polygons bzw. der Abstand zu den einzelnen Eckpunkten ermittelt. Bei der Optimierung dieses Prozesses stellte sich heraus, dass die iterative Ermittlung der Polygon-IDs der mit Abstand zeitaufwendigste Teil ist. Aus diesem Grunde kann dieser Vorgang bereits beim Starten des PlugIn einmalig durchgeführt und die entsprechenden IDs in einen Vektor geschrieben werden, auf dessen Komponenten schnell zugegriffen werden kann, ohne die API zu bemühen. Dies ist möglich, da sich das Modell der Felswand während der Arbeit natürlich nicht verändert.

Um die Navigation auf dem Visualisierungsbildschirm 14 im dargestellten 3D-Modell zu erleichtern, wurde in einer praktischen Umsetzung des Verfahrens eine Bedienoberfläche eingefügt, wie im rechten Teil der Figur 7 dargestellt ist.

Diese verfügt über Buttons das Verschieben, Drehen und Skalieren der aktuellen Ansicht und erlaubt somit die Veränderung des Ansichtspunktes. Außerdem ist es möglich, die verschiedenen zuvor erzeugten und gespeicherten Kletterrouten ein- bzw. wieder auszublenden.

Ein Test der Umsetzung des Verfahrens wurde mit Bergrettern aus Ramsau (Steiermark) unter kritischen Wetterbedingungen in einer Rettungsübung in der Dachsteinsüdwand durchgeführt. Der ohne Sicht operierende Retter 1 konnte im virtuellen Modell geortet und von der Einsatzleitung dirigiert werden. In dem vierstündigen Einsatz konnte die Tauglichkeit des Systems in Bezug auf Positionierungsgenauigkeit und Zuverlässigkeit der eingesetzten Hard- und Softwarekomponenten bestätigt werden. Die Möglichkeiten, die ein solches System zur Verbesserung der Sicherheit und Logistik von Bergrettungseinsätzen im Hochgebirge erbringen kann, wurden von allen Beteiligten positiv eingeschätzt.

Neben einer wünschenswerten Verfeinerung des Felswandmodells mittels effizienter Aufnahmetechniken und unter Minimierung des entstehenden Datenvolumens besteht weiterer Forschungs- und Entwicklungsbedarf zur Nachbearbeitung der partiell ungenauen GPS-Signale aus einem Gerät der "Consumer-Klasse" mit dem Ziel einer verbesserten Positionierungssicherheit.

Im vorgestellten System wurden erfolgreich anwendungsspezifisch erhobene und aufbereitete Geodaten, dynamische Positionsdaten sowie eine funktional erweiterte Visualisierungskomponente gekoppelt, um ein prototypisches Bergrettungsassistenzsystem zu schaffen. Um den speziellen Anforderungen gerecht zu werden, mussten neue Datengrundlagen (3D-Wandmodell) und neue technische Lösungen geschaffen werden. Softwareseitig betrifft das das Smartphone, den Positionsdatenserver, die Visualisierungslösung und die Kommunikation der Komponenten. Der Zielsetzung einer weitestgehenden Verwendung von handelsüblichen Komponenten konnte entsprochen werden. Ebenso ist das System problemlos auf andere Gebiete übertragbar, sofern ein entsprechendes 3D-Wandmodell geschaffen wird und Mobilfunkabdeckung gewährleistet ist.

Folgende Systemergänzungen werden als sinnvoll angesehen und vorgeschlagen:
- Möglichkeit des individualisierten Trackings sowohl für Retter als auch für Kletterer (z.B. über die Ausleihe eines konfektionierten Smartphones vor Tourbeginn)
- Ergänzung des Felswandmodells um zusätzliche nichtbildliche, kategorisierte Objekte (alle Sicherungskomponenten im Fels, günstige Durchstiege, besonders gefährliche Partien z.B. aufgrund Steinschlaggefahr).

Es fehlt aus Zeitgründen bisher auch noch eine valide Prüfung der geometrischen Qualität des 3D-Felswandmodells. Aus der Aufnahmekonfiguration lässt sich eine starke Qualitätsstreuung innerhalb der Modellsegmente vermuten. Aufbauend auf einer systematischen Analyse wären Modellverbesserungen sinnvoll. Diese könnten in lokalen Modellergänzungen im Bereich sichttoter Räume, in sekundären Punklagekorrekturen und lokalen Verdichtungen liegen.

Ein solches evaluiertes und verbessertes Wandmodell kann allerdings zahlreiche sinnvolle Anwendungen bedienen. Sowohl statische wie animierte Ausgabeformen für Tourismusmarketing, Kletterführer und für Lehrzwecke sind vorstellbar.

Zusammenfassung: Bergrettung muss möglichst schnell und unter der Prämisse maximal möglicher Sicherheit des Rettungsteams stattfinden. Die Bergung von Personen aus einer Felswand ist extrem erschwert, wenn durch Tageszeit oder Nebel direkter Sichtkontakt verhindert ist. Das hier dargestellte Projekt und die hier vorliegende Anmeldung beschreibt eine technische Lösung, um unter diesen erschwerten Bedingungen die Ortung des zu Bergenden und die Navigation des Rettungsteams in der Felswand von einer Rettungsleitstelle aus technisch optimal zu unterstützen.

Dabei wurden Standardkomponenten wie ein Smartphone mit GPS-Funktionalität, eine Datenkommunikationsstrecke auf Client-Server-Basis und VR-Visualisierungssoftware an projektspezifische Anforderungen angepasst. Eine Fernunterstützung der Bewegung im Fels verlangt zudem ein hochpräzises Wandmodell, welches es ortskundigen Experten in der Rettungsleitstelle ermöglicht, die Felsgeometrie und -struktur auf dem Rettungsweg verlässlich einzuschätzen und die nötigen Direktiven an die Retter weiterzugeben.

Ein solches Modell wurde für die Dachsteinsüdwand in Österreich mittels Laserscans von verschiedenen Standorten aus aufgebaut und mit digitalen Kameraaufnahmen texturiert. In ca. einjähriger Entwicklungszeit wurden innerhalb eines interdisziplinären Teams an der TU Dresden (Informatik, E-Technik, Kartographie) verschiedene technische Teilmodule des Bergrettungsunterstützungssystems entwickelt (digitales Felswandmodell, optimierte GPS-Datenübertragung zwischen mobilem Gerät, Server und Client, Datenfilterung sowie dynamische Visualisierungskomponente) und integriert. Die Funktionsfähigkeit des Prototyps wurde bei einer Bergrettungsübung unter realistischen Bedingungen erstmalig getestet und konnte bewiesen werden.

**Bezugszeichenliste**

| | |
|---|---|
| 1 | Nutzer |
| 2 | drahtlose Datenübertragung (z. B. Mobilfunknetz) |
| 3 | mobiler GPS-Empfänger mit Positionssender |
| 4 | zentraler Datenserver |
| 5 | Web-Client |
| 6 | Offline Laserscanning |
| 7 | Generierung des 3D-Geländemodells |
| 8 | Visualisierungskomponente |
| 9 | Benutzerschnittstelle |
| 10 | Smartphonesoftware zur Datenübertragung |
| 11 | Web-Interface |
| 12 | Modul Koordinatentransformation |
| 13 | Modul Verarbeitung der GPS-Daten |
| 14 | Visualisierungsbildschirm |
| 15 | Geländeabschnitt |
| 16 | Marke |

## Patentansprüche

1. Verfahren zur Ortung und Bergung von Personen, bei welchem GPS-Positionsdaten, zur Ortsbestimmung eines Nutzers innerhalb eines Geländeabschnitts, an einen zentralen Server drahtlos übermittelt und gespeichert werden, **dadurch gekennzeichnet, dass** von dem Geländeabschnitt ein dreidimensionales Modell erstellt wird und dass die autonom übertragenen GPS-Positionsdaten in einer Ansicht des dreidimensionalen Modells als Positionsmarken dargestellt werden.

2. Verfahren nach Anspruch 1, **dadurch gekennzeichnet, dass** die GPS-Positionsdaten einer Filterung und/oder Plausibilitätsprüfung unterzogen werden.

3. Verfahren nach Anspruch 1 oder 2, **dadurch gekennzeichnet, dass** die GPS-Positionsdaten automatisch ohne Nutzerinteraktion zum zentralen Server übertragen werden.

4. Verfahren nach einem der Ansprüche 1 bis 3, **dadurch gekennzeichnet, dass** die GPS-Positionsdaten vor ihrer Darstellung in ein für das dreidimensionale Modell genutztes Koordinatensystem umgerechnet werden.

5. Verfahren nach einem der Ansprüche 1 bis 4, **dadurch gekennzeichnet, dass** das dreidimensionale Modell und die Positionsmarken auf einem Visualisierungsbildschirm dargestellt werden.

6. Verfahren nach einem der Ansprüche 1 bis 5, **dadurch gekennzeichnet, dass** im dreidimensionalen Modell auch Zusatzinformationen dargestellt werden können.

7. Verfahren nach einem der Ansprüche 1 bis 6, **dadurch gekennzeichnet, dass** die Zusatzinformationen Kletterrouten oder Gefahrenstellen sind.

8. Verfahren nach einem der Ansprüche 1 bis 7, **dadurch gekennzeichnet, dass** vor der Darstellung der Positionsmarke im dreidimensionalen Modell eine Anpassung der Positionsmarke an die Modelloberfläche erfolgt.

9. Anordnung zur Ortung und Bergung von Personen, bei welcher ein mobiles Endgerät GPS-Positionsdaten ermittelt und drahtlos mit einem zentralen Datenserver zur Datenübertragung verbunden ist, **dadurch gekennzeichnet, dass** der zentrale Datenserver eine Speichereinheit, zur Speicherung der empfangenen Daten, eine Transformationsanordnung, zur Transformation der empfangenen GPS-Daten in ein Koordinatensystem, eine Verarbeitungseinheit, zur Plausibilitätsprüfung und Anpassung der Daten an ein dreidimensionales Modell vor deren Darstellung, aufweist und dass der zentrale Datenserver drahtlos mit einer Visualisierungskomponente, zur Darstellung des dreidimensionalen Modells und der GPS-Positionsdaten, verbunden ist.
